# EUROPEAN PATENT SPECIFICATION

(11) **EP 4 435 192 B1**
(45) Date of publication and mention of the grant of the patent: **24.12.2025**
(21) Application number: 24164256.0
(22) Date of filing: 18.03.2024
(51) Int. Cl.: E04C 3/34, A01C 3/02

(54) **JACKETED PILLAR TO BE CAST ON SITE**
UMMANTELTE SÄULE ZUM VOR-ORT-GIESSEN
COLONNE CHEMISÉE À COULER SUR SITE

(30) Priority: 22.03.2023 IT 202300005397
(43) Date of publication of application: 25.09.2024
(73) Proprietor: Corradi e Ghisolfi Srl, 26010 Corte de' Frati (CR) (IT)
(72) Inventor: CORRADI, Bruno, 26010 Corte de' Frati (CR) (IT); CORRADI, Paolo, 26010 Corte de' Frati (CR) (IT)
(74) Representative: Fezzardi, Antonio

(56) References cited:
- EP-A1- 2 591 655
- PL-B1- 204 767
- US-A- 5 263 297
- US-B1- 6 324 792

## Description

The present invention relates to the field of biogas production plants, with particular reference to organic material storage tanks and anaerobic digesters.

More specifically, the invention relates to a jacketed pillar resistant to corrosion. The digester tanks are substantially made up of a peripheral structure and a bottom for the containment of organic substances. They are also equipped with a watertight roof and aimed at storing the gas produced by the fermentation/digestion of the organic substances contained therein.

Beams and pillars are provided to support such roof.

The pillars mentioned above are generally made of reinforced concrete, both due to its compressive strength, necessary to support the weight of the roof on top, and to the ease and cost-effectiveness of construction.

However, it is known that the digestion process generates acidic intermediate products which cause acid corrosion problems for the structures with which they come into contact.

Therefore, the pillars currently present in the fermenter tank are particularly subject to corrosive phenomena due to the environment saturated with aggressive agents in which they are immersed.

A commonly adopted solution is to paint the pillars with corrosion-resistant paints; such solution, however, is not definitive as the layer protecting the pillar tends to deteriorate and therefore scheduled cyclical maintenance interventions are necessary to restore this protective layer.

These interventions require the emptying of the fermentation tanks to carry out maintenance works; this need obviously results in a decrease in biogas production as well as the total shutdown of the plant if it is equipped with only one digester or a reduced power operation in systems with multiple digesters. The consequence of this maintenance involves significant economic expenses and significant economic losses due to lost production.

Alternative solutions to reinforced concrete pillars, although possible, are not used both because stainless steel is expensive and the loads involved would require an excessive number of pillars in the digester which could make other activities difficult, such as mixing of organic masses, for example.

PL204767B1 discloses a steel and concrete column, which comprises at least one segment in the form of a steel pipe ending with flanges and filled with concrete, which does not provide any protection against acid corrosion problems.

The main purpose of the present invention is to provide reinforced concrete pillars resistant to corrosion, which do not require as a result programmed recovery cycles, thus overcoming the limits of the state of art.

This was achieved by providing reinforced concrete pillars, each of which is jacketed with a respective stainless steel tube which form the external protective anti-corrosion coating.

A better understanding of the invention will be provided by the following description with reference to the accompanying drawings showing, purely by way of example, a preferred embodiment.

In the drawings:

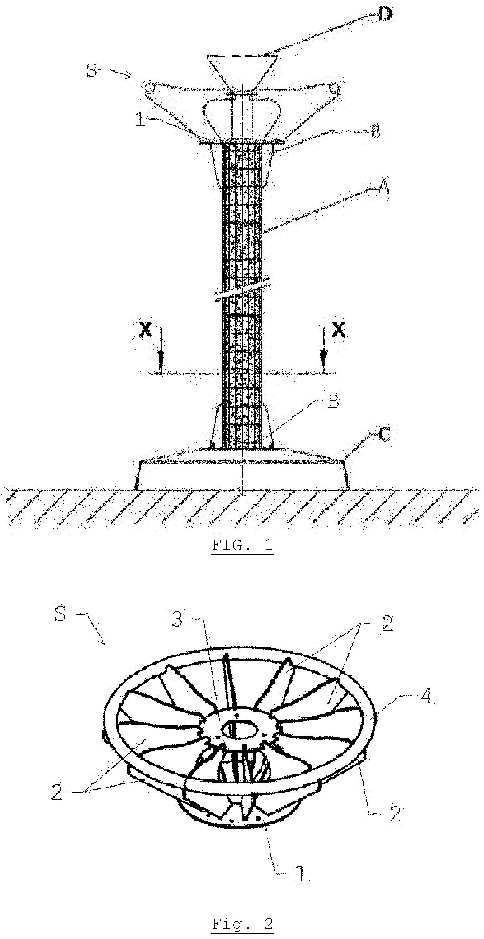

Figure 1 is an axial section view of a pillar according to the invention, which can be used in tanks with a circular plan.
Figure 2 is an isometric view of the upper bracket for circular tanks forming a capital that can be fixed to the upper flange of the pillar coating tube.

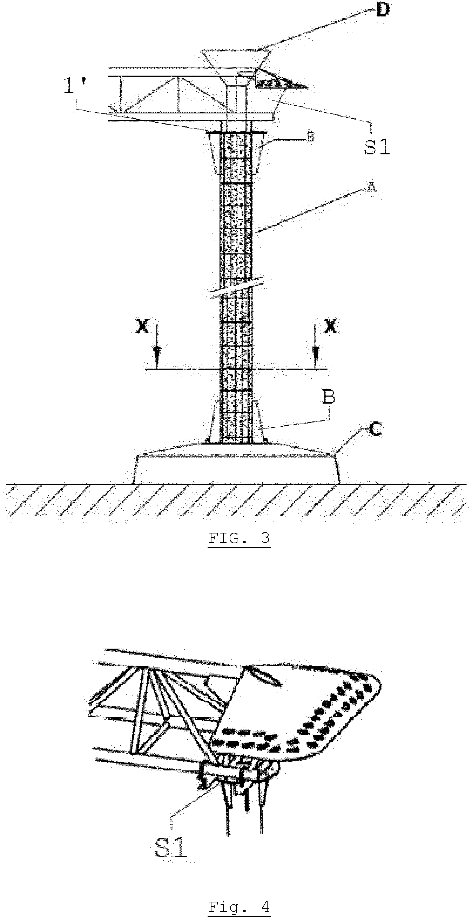

Figure 3 is an axial section view of a pillar according to the invention, which can be used in rectangular or quadrangular tanks.
Figure 4 is an isometric view of the upper end bracket for rectangular tanks forming a different capital that can be fixed to the upper flange of the pillar coating tube.
Figure 5 is a sectional view according to a transversal XX-trace plane indicated in figures 1 and 3, in which the bolts fixing the pillar to the concrete plinth can also be seen.

with reference to the figures described above, it is noteworthy that the corrosion-resistant stainless steel tube which is the coating of the reinforced concrete pillar, i.e. the subject of the present invention, advantageously serves as a formwork for the concrete and the metal reinforcement both forming the pillar.

According to the invention, tube (A) coating said pillar is equipped with a flange (B) at its top which facilitates the fixing of a capital configured as a bracket to support the beams extending over said pillar.

At the lower end of each pillar there is a second flange (B) at the end of the stainless steel tube, which is fixed, e.g. by bolts (E), to a respective plinth (c) suitably arranged on the bottom of the fermenter. The according to the invention includes the following elements:
- A stainless steel tube (A) which serves as a formwork for the metal reinforcement and for casting the concrete on site, as well as an external anti-corrosion protection coating of the reinforced concrete pillar;
- An upper flange (B) of said tube (A), for fixing an upper capital which serves as a bracket (s, s1) supporting the beams, as well as an element for temporarily inserting a hopper for casting concrete which the pillar consists of;
- A lower flange (B) of said tube (A) for fixing said tube to a plinth (c) which serves as a base for the pillar.

As stated according to the invention, the load-bearing structural element of beams covering the top of the digester for biogas plants is a reinforced concrete pillar, equipped with a metal reinforcement calculated as if it were provided for an usual pillar; wherein said reinforced concrete pillar is jacketed with a stainless steel tube (A) which also serves as a formwork, whose main function is the resistance to corrosion provided by the stainless steel.

Advantageously, the presence of said tube (A) allows the concrete to be cast on site, thus allowing the steel coating to be used as a formwork for the concrete, after having positioned the metal reinforcement of the reinforced concrete pillar inside said formwork.

In fact, one of the features of the invention consists in that one of the construction elements, that is to say the formwork, which is typically used to cast the pillar on site and then removed when the concrete has set, is not removed in this case as it has a protective function against corrosive phenomena when the fermenter comes into operation.

In other words, after having:
- bolted the bottom of each tube (A) to respective plinth (C),
- inserted the metal reinforcement inside the tube,
- installed above each pipe (A) the respective capital (s, s1) and the beams associated

therewith to support the roof of the digester,
it is advantageously possible to cast the concrete directly inside each tube (A), without any necessity of further operation for dismantling/finishing the reinforced concrete pillars thus obtained.

The diameter of tube (A) and consequently the corresponding jacketed pillar of reinforced concrete is a function of the load that must be supported by the pillar and the type of tank in which it is installed.

In rectangular tanks, for example, several aligned pillars are typically used having a smaller diameter than that of the pillars for circular tanks, in which a central pillar with a larger section is typically used.

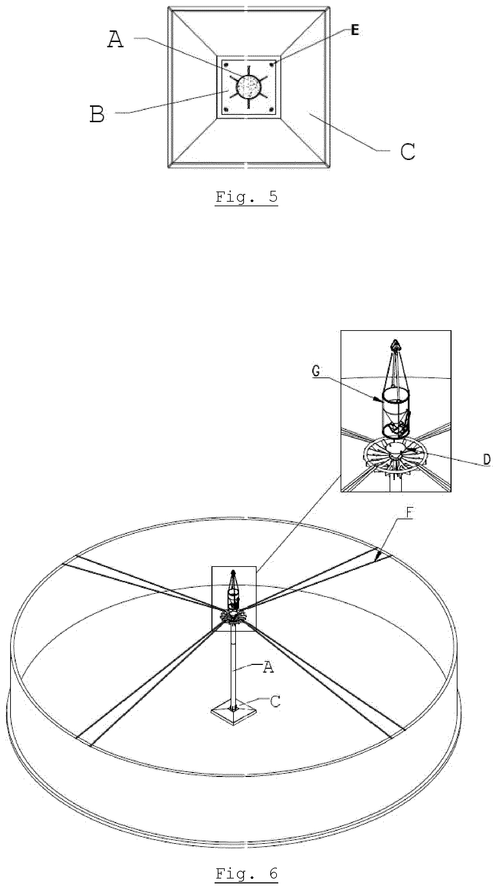

According to the invention, as already mentioned in the case of a circular tank (fig. 6), a metal capital (s) is fixed on upper flange (B), wherein the capital (S) consists of a lower flange (1) corresponding to upper flange (B) present on tube (A) and a plurality of stiffening fins (2) which are connected to said lower flange (1) at the bottom and to a central connecting disk (3) at the top, while the free ends of fins (2) are fixed to a peripheral torus (4) which serves both as a spacer for the fins and as a support element stiffening entire capital (s), as well as a structural element onto which the radial beams supporting the roof can be attached.

said capital (s) is fixed to upper flange (B) of tube (A), e.g. by bolting.

central connecting disk (3) and lower flange (1) have the shape of a circular crown, therefore with a central hole, so as to allow hopper (D) to be inserted inside capital (s) ending inside steel tube (A), thus allowing the casting of the concrete for the construction of the reinforced concrete pillar.

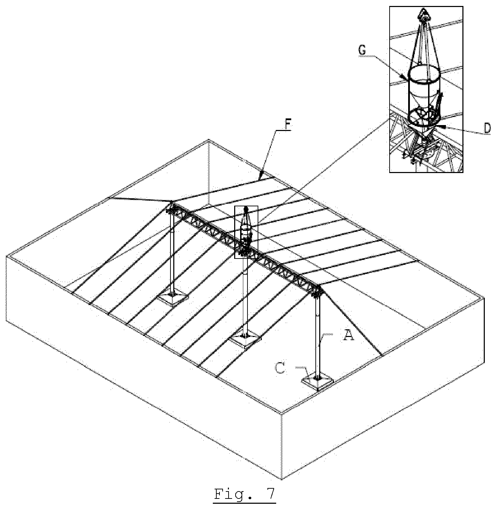

In the case of rectangular tanks (fig. 7), capital (s1) which can be fixed to upper flange (B) of tube (A) is essentially made up of a simple attachment for the ridge beams of the roof.

As shown in figures 6 and 7, bucket (G) for casting the concrete is designed to pour the concrete by gravity into hopper (D), while capital (s) or the ridge beams are temporarily fixed to the peripheral walls of the tank using suitable bracing straps (F).

In the preferred embodiment described, the lower flange of stainless steel tube (A) can be fixed to respective plinth (c) preferably by bolting. Advantageously, this allows for a rapid installation and implementation of tube (A) serving as a formwork for pillar and capital (s, s1).

## Claims

1. A jacketed pillar resistant to corrosion which can be used in storage tanks of organic material and digester tanks for the production of biogas, wherein it includes:
• a steel pipe (A) having the function of formwork for metal reinforcement and concrete casting;
• a capital (s, s1) that is fixed above said pipe (A) by means of a flange (B) disposed on the pipe itself;
• a plinth (C) fixed to said pipe (A) by means of a second lower flange (B) bolted thereto;
• a metal reinforcement disposed inside said pipe (A) in a concrete casting to provide a load-bearing reinforced concrete pillar jacketed inside the steel pipe (A);
**characterized in that** said steel pipe (A) is made of stainless steel to provide for the corrosion protection and **in that** said capital (s) essentially consists of a bracketing comprising a central connecting disc (3) to which the internal ends of a plurality of stiffening fins (2) are welded, as well as a circumferential torus (4) which performs the function both of spacer for the fins to which it is fixed, and stiffening member for the whole bracketing, as well as member to which the radial support beams of the roof can be fastened.

2. The pillar according to the preceding claim **characterized in that** said flanges (B) at both ends of said stainless steel pipe (A) are in the shape of a circular crown.

3. The pillar according to one or more of the preceding claims **characterized in that** said capital (s) consists of a lower flange (1) which is coupled to upper flange (B) of pipe (A) and fixed thereto by bolting as well as a plurality of stiffening fins (2) connected to said lower flange (1).

4. The pillar according to claim 1 or 2 **characterized in that** said capital (s1) consists of a lower flange (1') which is coupled to upper flange (B) of pipe (A) and fixed thereto by bolting, and a bracket essentially consisting of an attachment for the longitudinal ridge beams of the roof.

5. A support structure for the watertight covering of storage tanks of organic material as well as digester tanks of biogas production installations, **characterized in that** it includes a storage tank of organic substances as well as roof support beams working together with one or more corrosion-resistant reinforced concrete pillars according to one or more of claims 1 to 5, which are provided with an external corrosion-resistant coating jacket consisting of said stainless steel pipe (A).

## Patentansprüche

1. Korrosionsbeständige ummantelte Säule, die in Lagerbehältern für organisches Material und in Faulbehältern für die Erzeugung von Biogas verwendet werden kann, wobei sie umfasst:
- ein Stahlrohr (A), das die Funktion einer Schalung für eine Metallbewehrung und einen Betonguss hat;
- ein Kapitell (S, S1), das mittels eines Flansches (B), der an dem Rohr selbst angeordnet ist, über dem Rohr (A) befestigt ist;
- einen Sockel (C), der mittels eines zweiten, unteren Flansches (B), der daran angeschraubt ist, an dem Rohr (A) befestigt ist;
- eine Metallbewehrung, die innerhalb des Rohres (A) in einem Betonguss angeordnet ist, um eine tragende Stahlbetonsäule bereitzustellen, die innerhalb des Stahlrohres (A) ummantelt ist;
**dadurch gekennzeichnet, dass** das Stahlrohr (A) aus Edelstahl hergestellt ist, um für den Korrosionsschutz zu sorgen, und dass das Kapitell (S) im Wesentlichen aus einer Konsolenanordnung besteht, die eine zentrale Verbindungsscheibe (3), an welche die inneren Enden mehrerer Versteifungsrippen (2) geschweißt sind, sowie einen um den Umfang verlaufenden Torus (4) umfasst, der sowohl die Funktion eines Abstandhalters für die Rippen, an denen er befestigt ist, als auch die eines Versteifungselements für die gesamte Konsolenanordnung sowie die eines Elements, an welchem die radialen Tragbalken des Daches befestigt werden können, erfüllt.

2. Säule nach dem vorhergehenden Anspruch, **dadurch gekennzeichnet, dass** die Flansche (B) an beiden Enden des Edelstahlrohres (A) die Form einer kreisförmigen Krone aufweisen.

3. Säule nach einem oder mehreren der vorhergehenden Ansprüche, **dadurch gekennzeichnet, dass** das Kapitell (S) aus einem unteren Flansch (1), der mit dem oberen Flansch (B) des Rohres (A) gekoppelt und durch Verschrauben daran befestigt ist, sowie aus mehreren Versteifungsrippen (2), die mit unteren Flansch (1) verbunden sind, besteht.

4. Säule nach Anspruch 1 oder 2, **dadurch gekennzeichnet, dass** das Kapitell (S1) aus einem unteren Flansch (1'), der mit dem oberen Flansch (B) des Rohres (A) gekoppelt und durch Verschrauben daran befestigt ist, und einer Konsole besteht, die im Wesentlichen aus einer Befestigung für die längs verlaufenden Firstbalken des Daches besteht.

5. Tragkonstruktion für die wasserdichte Abdeckung von Lagerbehältern für organisches Material sowie von Faulbehältern von Biogaserzeugungsanlagen, **dadurch gekennzeichnet, dass** sie einen Lagerbehälter für organische Substanzen sowie Dachtragbalken umfasst, die mit einer oder mehreren korrosionsbeständigen Stahlbetonsäulen gemäß einem oder mehreren der Ansprüche 1 bis 5 zusammenwirken, welche mit einem äußeren korrosionsbeständigen Verkleidungsmantel, der aus dem Edelstahlrohr (A) besteht, versehen sind.

## Revendications

1. Pilier gainé résistant à la corrosion qui peut être utilisé dans des cuves de stockage de matières organiques et des cuves de digestion pour la production de biogaz, comprenant :
• un tube en acier (A) servant de coffrage pour une armature métallique et une coulée de béton ;
• un chapiteau (S, S1) qui est fixé au-dessus dudit tube (A) au moyen d'une bride (B) disposée sur le tube lui-même ;
• un socle (C) fixé audit tube (A) au moyen d'une deuxième bride inférieure (B) boulonnée à celui-ci ;
• une armature métallique disposée à l'intérieur dudit tube (A) dans une coulée de béton pour former un pilier en béton armé porteur gainé à l'intérieur du tube en acier (A) ;
**caractérisé en ce que** ledit tube en acier (A) est en acier inoxydable pour assurer une protection contre la corrosion et **en ce que** ledit chapiteau (S) est essentiellement constitué d'un encadrement comprenant un disque central de liaison (3) auquel sont soudées les extrémités internes d'une pluralité d'ailettes de raidissement (2), ainsi que d'un tore circonférentiel (4) qui remplit à la fois la fonction d'entretoise pour les ailettes auxquelles il est fixé et d'organe de raidissement pour l'ensemble de l'encadrement, ainsi que d'un élément auquel les poutres de support radiales du toit peuvent être fixées.

2. Pilier selon la revendication précédente, **caractérisé en ce que** lesdites brides (B) aux deux extrémités du tube en acier inoxydable (A) ont la forme d'une couronne circulaire.

3. Pilier selon une ou plusieurs des revendications précédentes, **caractérisé en ce que** ledit chapiteau (S) est constitué d'une bride inférieure (1) qui est accouplée à une bride supérieure (B) du tube (A) et y est fixée par boulonnage, ainsi que d'une pluralité d'ailettes de raidissement (2) reliées à ladite bride inférieure (1).

4. Pilier selon la revendication 1 ou 2 **caractérisé en ce que** ledit chapiteau (S1) est constitué d'une bride inférieure (1') qui est accouplée à la bride supérieure (B) du tube (A) et y est fixée par boulonnage, et d'un support essentiellement constitué d'une fixation pour les poutres faîtières longitudinales du toit.

5. Structure de support pour le revêtement étanche de cuves de stockage de matières organiques ainsi que de cuves de digestion d'installations de production de biogaz, **caractérisée en ce qu'**elle comporte une cuve de stockage de substances organiques ainsi que des poutres de support de toit fonctionnant conjointement avec un ou plusieurs piliers en béton armé résistants à la corrosion selon une ou plusieurs des revendications 1 à 5, qui sont dotés d'une gaine de revêtement externe résistante à la corrosion constituée dudit tube en acier inoxydable (A).
